# EUROPEAN PATENT SPECIFICATION

(11) **EP 1 223 884 B1**
(45) Date of publication and mention of the grant of the patent: **16.08.2006**
(21) Application number: 00907373.5
(22) Date of filing: 02.03.2000
(51) Int. Cl.: A61C 3/025

(54) **DENTAL ABRADING TOOL**
ZAHNÄRZTLICHES SCHLEIFWERKZEUG
INSTRUMENT D'ABRASION POUR LES DENTS

(30) Priority: 15.10.1999 CA 2286876
(43) Date of publication of application: 24.07.2002
(73) Proprietor: iX Research Ltd., Richmond Hill, Ontario L4E 3P5 (CA)
(72) Inventor: AUMULLER, Paul, M., Richmond Hill, Ontario L4E 3P5 (CA)
(74) Representative: UEXKÜLL & STOLBERG
(86) International application number: PCT/CA2000/000208
(87) International publication number: WO 2001/028449

(56) References cited:
- DE-U- 29 820 845
- FR-A- 2 624 369
- US-A- 2 696 049
- US-A- 4 174 571

## Description

### FIELD OF THE INVENTION

The present invention relates to dental abrasion devices according to the preamble of claim 1.

### BACKGROUND OF THE INVENTION

The conventional technique for repairing or otherwise treating teeth in dental procedures such as the removal of caries or in the manufacture/repair of dental prosthetics (eg. crowns, dentures) typically involve the use of rotary drills. These drills perform at preset speeds; typically "high or "low": As a result, these instruments lack fine control and are imprecise. Furthermore, the drilled surfaces are relatively smooth and are generally not ideal adhesive surfaces for the metals, porcelain, acrylics and/or composites routinely used in dental practice.

As an alternative, the use of air abrasion in micro-dentistry (AAMD) is attractive. Its current but limited use extends to both intra (ie. removal of caries) and extraoral (ie. dental prosthetics) applications. A major advantage of AAMD over conventional rotary drills is that it is more precise and affords the user much more control in the aforementioned intra and extraoral applications. Additionally, AAMD typically results in augmented and eroded surface areas which are more amenable to adhesion to metals, porcelain, acrylics and composites. This latter adhesion can be increased by 80% when compared with surfaces resulting from conventional drilling.

Notwithstanding the apparent advantages of AAMD over conventional rotary drilling, the use of the former has been limited by technical and health related difficulties. Conventional AAMD devices are not capable of controlling emissions of both the abrasive dust and airborne abraded dental amalgam material, inside the mouth of the patient and outside to the dental operatory. The abrasive material typically includes an aluminum oxide powder of 27.5 to 50.0 microns in particle size and therefore travels easily in ambient air as dust. Its aluminum content makes it a toxicological risk for alzheimer's Disease. Meanwhile, the abraded dental amalgam can have constituents such as mercury from old dental fillings. This contamination of dental operatories persists in current applications despite the use of high efficiency particulate air (HEPA) vaccum systems. Furthermore, extensive use of intraoral later rubber dams are also necessary to aid in the prevention of inhaling the respirable aluminum powder by patients. The use of these latex rubber claims in also problematic in light of the possibility of inducing latex-associated asthmatic and respiratory-type reactions. As neither prevention technique is particularly efficient or effective, the continuance of exposure to the abrasive dust and abraded dental amalgam and the attendant potential for health complication(s) is of concern to both patients and dental professionals.

It is known in the prior art to surround the abrasive stream with a curtain of water, so as to minimize contamination. An example of such a prior art device is disclosed in DE 298 20 845, on which the preamble of claim 1 is based. By utilization of sufficient amounts of water, so as to form a continuous curtain surronding and impinging upon the soluble abrasive stream, airborne contaminants can be controlled, but this may have deleterious affects upon the ability of the technician to view the target area. Further, the volume of water utilized may require significant evacuation efforts with conventional liquid suction systems, impeding the ability of the technician to complete the operation at hand, and adding to the overall discomfort to the patient.

In light of this prior art, the development of an abrasion system that provides improved dust suppression would be considered revolutionary within the field of micro-dentistry. As such, overcoming the problem of respirable dust would create better visibility, healthier conditions, make practical extra and intra-oral usage and eliminate the need for costly high efficiency particulate air (HEPA) filter vacumm units.

It is therefore an object of the present invention to provide a novel dental abrasion device.

### SUMMARY OF THE INVENTION

According to the present invention, there is provided a dental abrasion device including first delivery means for delivering an abrasive material to a target region, characterized by a supply means for producing an aerosol from incoming water and air and for supplying said aerosol and a second delivery means for delivering said aerosol near said target region under conditions sufficient to suppre; airborne emissions of said abrasive material from said target region.

Preferably, the first delivery means includes a head and a nozzle mounted on a the head with a first conduit therein to receive the abrasive material. The second delivery means includes a plurality of second conduits near the first conduit to receive - the pressurized aerosol. The second conduits are arranged so that the aerosol leaving them generates, for example, a curtain-like stream toward the tooth-region. In other words, the individual aerosol streams leaving the second conduits converge to a hollow substantially continuous stream to define an inner region. Conveniently, the first conduit may be arranged to deliver the abrasive material to the inner region The pressure and content of the aerosol stream can thus retard or, in some cases prevent, airborne abrasive material from breaking through the curtain, either causing it to be entrained in the aerosol or to be repelled back into the inner region.

The pressuhzed aerosol is a mixture of water and air. The aerosol may include 10 to 75 percent water by volume, or more preferably 25 to 65 percent water by , volume. The pressurized aerosol itself may be dispensed, if desired, at pressures ranging from 5 to 75 psi [from 134 kPa to 619 kPa], for example.

Preferably, the pressurized fluid forms a curtain of fluid around the tooth region. More preferably, the curtain completely encircles the tooth region.

Thus, the invention provides a dental abrading tool that utilizes abrasive dust as the abrasion material, and which provides effective dust suppression by the use of a fluid stream, such as for example a water-aerosol spray. In this example, the tool emits a stream of the abrasive material as well as the water-aerosol spray, the latter under conditions sufficient to minimize the amount of dust leaving the tooth region and thus control widespread contamination by the airborne abrasive material.

For example, the dental abrading tool may be hand controlled, by way of "push button" or "touch sensory" controls. Furthermore, the controls may be such that the fluid and abrasive streams are continuously variable, are regulated in a stepwise manner (ie. high-medium-low), or are controlled in a simple on-off manner. The tool may also be used with a foot pedal or other such control mechanisms. The invention may also control the composition of the abrasive material stream and the fluid stream, such as pressure, flow rate, temperature and the like. The tool can also be made adaptable to operatory compressors, and water and electrical supply outlets as allowed by available technology.

### BRIEF DESCRIPTION OF THE DRAWINGS

Several preferred embodiments of the present invention will be provided, by way of example only, with reference to the appended drawings, wherein:
Figure 1 is a side view of a dental abrading tool;
Figure 2 is a magnified side view of one portion of the tool of figure 1;
Figures 3b to 3d are side views of alternatives to the portion shown in figures 2 and 3 a;
Figures 4 and 5 are side views of alternative dental abrading tools;
Figure 6 is a side view of still another dental abrading tool;
Figure 7 is an assembly view of the tool of figure 6;
Figure 7a is a magnified view of a portion of the tool of figure 6;
Figure 7b is a schematic view of a dental abrasion system; and
Figures 8a through 8e are schematic views of a dental abrading technique.

### DESCRIPTION OF THE PREFERRED EMBODIMENTS

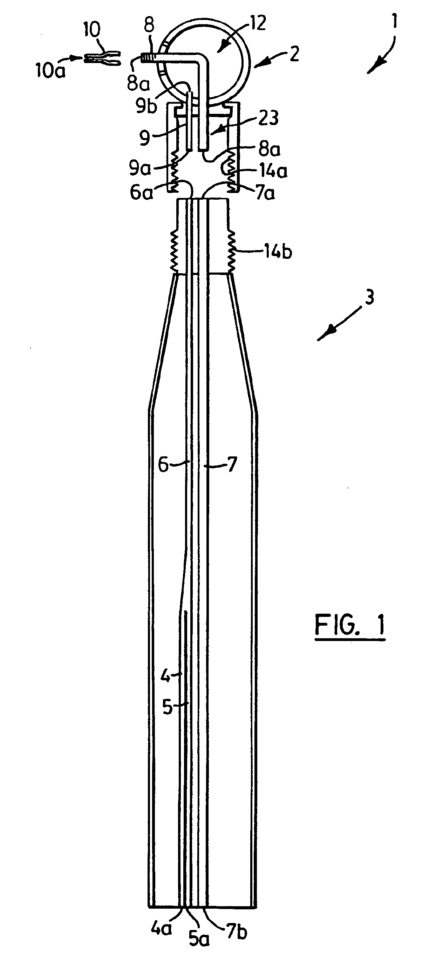

Referring now to figure 1, an abrading tool is shown at 1 having a head section 2 which is removably attached to a body section 3 by a threaded connection shown at 14a and 14b, it being understood that other attachment modes and means are also feasible. The head section 2 defines a cavity 12 into which a water supply tube 9 opens and across which an abrasive material supply tube 8 extends. A detachable nozzle 10 is affixed to a portion of tube 8 that extends outwards from the head section 2.

Body section 3 is an elongated structure containing a series of tubes 4, 5, 6, and 7 which cross but do not empty internally to body section 3. Tube 7 crosses the entire length of body section 3 and opens externally at either ends of body section 3 at tube openings 7a and 7b. Similarly, tubes 4 and 5 open externally to body section 3 at tube openings 4a and 5a respectively. At a point distal to these tube openings (ie. 4a and 5a) and internal of the body section 3, tubes 4 and 5 merge into a single tube 6. This latter tube 6 opens externally to body section 3 at tube opening 6a. However, it will also be understood that these tubes may be joined at other points both internal and external to the body section. For example, an external control portion may be a convenient place to mix the constituents of the pressurized fluid.

When the head section 2 and the body section 3 are joined or fastened together, tube 9 joins with tube 6 (openings 9a and 6a form a juncture point) and tube 8 joins with tube 7 (openings 8a and 7a form a juncture point). Air may be pumped into tube 4 (through tube opening 4a) and water into tube 5 (through tube opening 5 a) or vice versa. The air and water streams are mixed to form a water-aerosol at the point in which tubes 4 and 5 merge, and in tube 6 thereafter. This water-aerosol flows through tube 6, and then tube 9 to empty into cavity 12. Abrasive material is streamed under pressure into tube 7 via opening 7b. The abrasive material streams through tube 7 into contiguously joined tube 8 to exit at tube opening 8b.

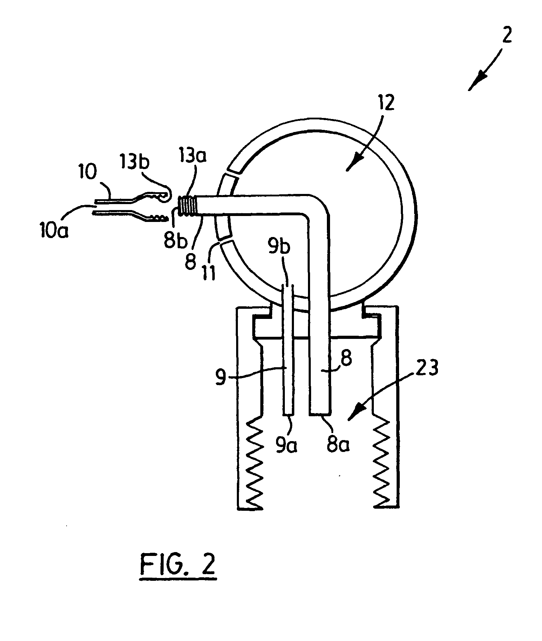

Referring to figure 2, a nozzle 10 is further attached to tube 8 via threaded means 13a and 13b, though it will be understood that other attachment modes and means are feasible. Nozzle 10 opens at some external point (10a) to head section 2. This nozzle 10 and its opening 10a can be of various sizes and configurations. As previously noted, abrasive material is streamed under pressure through tube 8, to subsequently exit through opening 10a to nozzle 10. The water-aerosol emptying from tube 9 fills cavity 12 of head section 2. The water-aerosol is channelled through openings 11 of head section 2 to form a water curtain that surrounds nozzle 10. It is the formation of this water curtain that may be configured effectively to control and minimize the widespread contamination of the surroundings by airborne abrasive material emitted through nozzle 10.

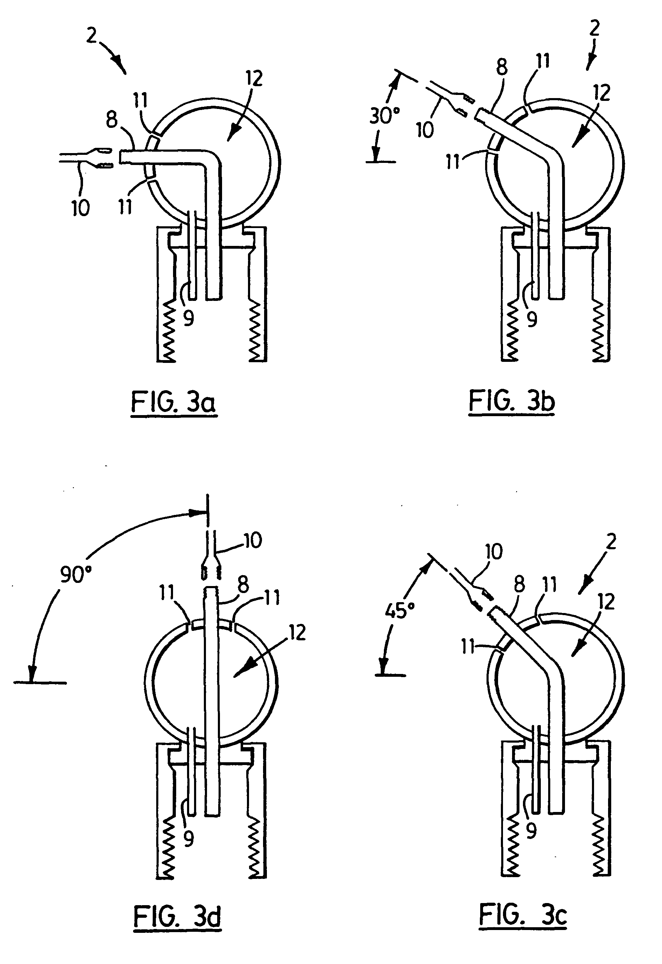

Figures 3a through 3d show alternatives to the head section 2 in which the fixed angle that tube 9 crosses cavity 12 varies. It should be noted that other embodiments are envisioned in which a swivel hinge or mechanism is incorporated in a single head section 2 thus allowing for the variable adjustment of this angle.

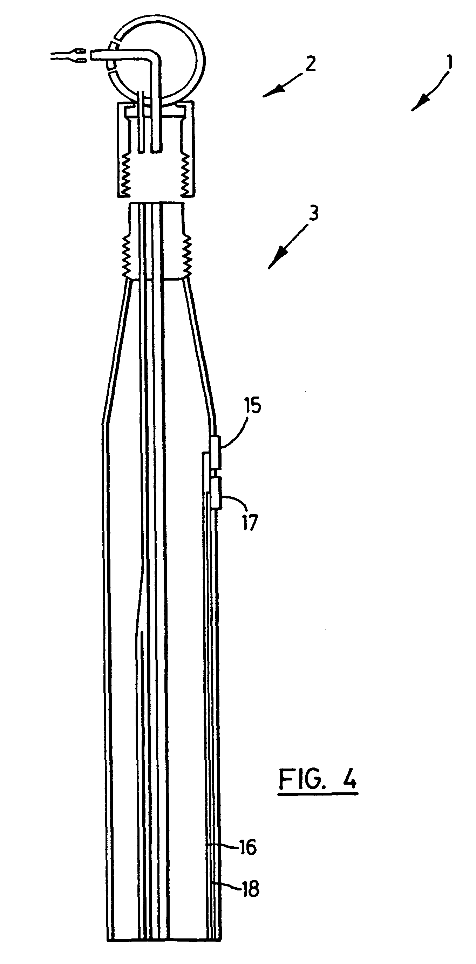

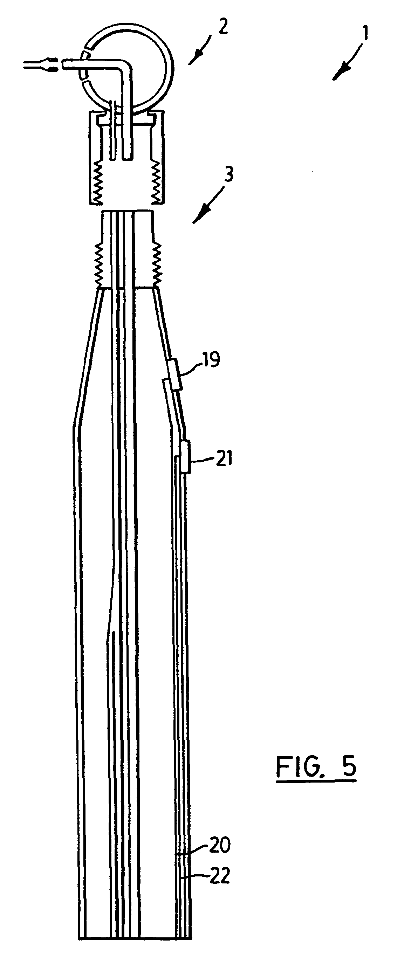

Figure 4 illustrates an alternative in which the controlling mechanism for regulating the abrasive material stream and the analogous controlling mechanism for regulating the water-aerosol stream are push-button switches (15 and 17 respectively). These switches function in a simple on-off format. Electrical line 18 supplies electricity to switch 17 and electrical line 16 supplies electricity to switch 15. In the alternative shown in figure 5, the controlling mechanism for regulating the abrasive material stream is a touch-control switch 19, while the touch-control switch 21 regulates the water-aerosol stream. These switches are turned on or activated when depressed. Electrical lines 20 and 22 supply power to switches 19 and 21, respectively.

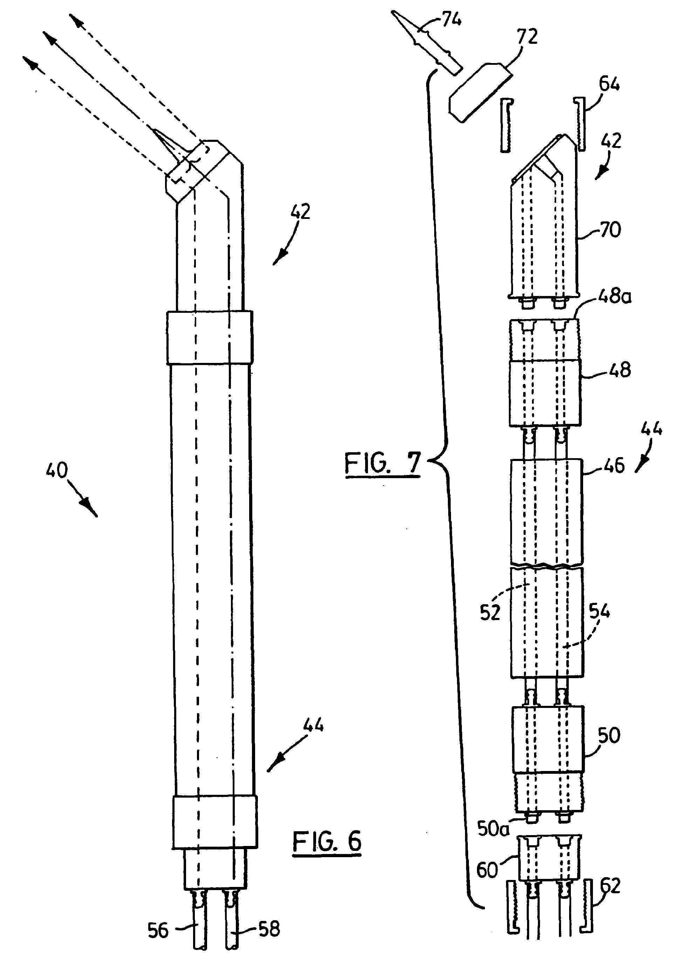

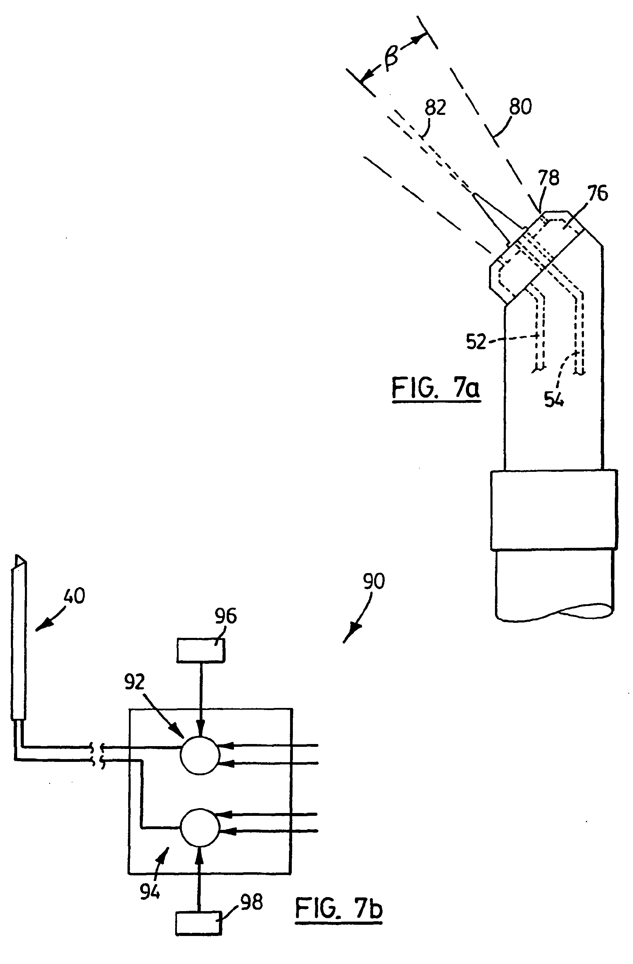

Figures 6, 7 and 7a illustrate another dental abrading tool 40. In this case, the tool 40 has a downstream nozzle portion 42 and an upstream body portion 44. The body portion has a central section 46 which is joined to two end sections 48 and 50, each defining downstream and upstream ends 48a and 50a, respectively. The upstream body portion 44 also has a pair of channels 52, 54 to receive the fluid stream and the abrasion material stream from external supply lines 56 and 58, respectively. The supply lines are suitably mounted in a connector 60 which is coupled to the upstream body section by a threaded ring 62. The channels 52, 54 extend between the downstream end 48a and the upstream end 50a. The downstream end is coupled with the nozzle portion 42 by way of threaded collar 64.

The nozzle portion 42 includes a main portion 70 with a nozzle body 72 threadably coupled therewith. The nozzle body also has a nozzle end piece 74 which is threadably coupled with the nozzle body.

The nozzle portion has a cavity which forms, together with the nozzle body, an inner fluids receiving chamber 76 which is open only to the channel 52 and to a number of conduits, in this cases external orifices shown at 78. Thus, fluids at the entry end of the main body travel through the channel, into the nozzle body, into the chamber and through the orifices to form a curtain which is shown by the short dashed lines at 80.

The conduits may be provided in a number of configurations including slits or generally circular passages which are oriented to deliver the fluids at an angle p, as shown in figure 7a, which may range from 0 to 45 degrees, for example.

The nozzle portion also forms with the nozzle body a single passage for the abrasive material from the channel 54 through to the nozzle, thereby forming a path for the abrasive material through the channel, through the nozzle body and along the path shown by the chain dotted lines at 82. In this case, the abrasive material path is centrally located relative to the fluid paths leaving the orifices.

Referring to figure 7b, the tool 40 may from part of a dental abrasion system 90 which includes an external control portion which includes a first supply channel 92 to supply a pressurized stream of abrasion materials and a second supply channel 94 to supply a stream of pressurized fluid. In this case, the control portion may also include controls 96, 98 to adjust the variables for each stream. The first and second channels may include compressors, mixing chambers, heaters and other means for preparing and conditioning the two streams.

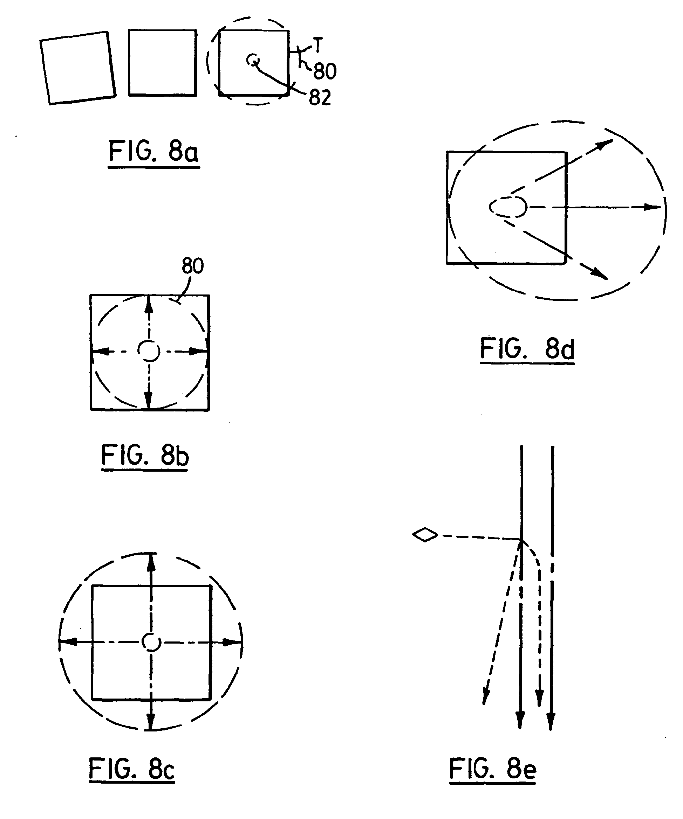

The operation of the tool is illustrated in the figures 8a to 8e. In figure 8a, three teeth are shown schematically by the rectangles 'T'. The abrasive path is shown as the 'bullseye' of a target shown at 82 while the fluid path is shown as a relatively wider circle near the periphery of the tooth T by the dashed lines at 80. While not intending to be bound by theory, it is believed that individual abrasive materials collide with the tooth in the tooth region and assume random trajectories illustrated for example by the four compass like arrows in figure 8b, thereby toward the fluid curtain at the circle 80.

If desired, the curtain 80 may be larger than the periphery of the tooth as shown by figure 8c or may take on an ellipsoid like pattern relative to the tooth, as for example might occur if the dental tool is positioned at a smaller angle relative to the tooth. In this latter case, the trajectories of the abrasive materials is shown generally in the right hand direction.

The curtain is in fact a convergence of fluid flows from the individual orifices 78, in this particular example. The fluid will have a momentum which will be dependent on the proportion of the fluid which is a relatively dense material such as water. The greater the proportion of water in the fluid stream, the greater the chance that the approaching abrasion material particle with collide with or become entrained with an individual droplet in the fluid. This may cause the particle to be repelled back toward the tooth region and thus remain airborne or otherwise be entrained in the fluid.

While the technique may not in some cases have the capability to inhibit each and every abrasion particle from actually penetrating the curtain, passing through it and remaining airborne on outside the curtain, it is believed that the technique can be adjusted to provide very high recapture rate.

In those cases where the abrasive particles do successfully pass through the curtain, such liberated particles should have lost a significant portion of its energy, thereby reducing its capacity to damage or otherwise penetrate tissues near the tooth region and outside the curtain. The abrasive material thus becomes entrained in the fluids or the saliva of the patient or both which can subsequently be removed by conventional suction techniques.

While not intending to be bound by theory, there are believed to be several variables that are interdependent and changes to them may have positive, for that matter negative, effects on the ability for the system to suppress airborne abrasion materials. For example, increasing the liquid content of the fluid supply, such as water for example, may improve the dust suppression ability of the fluid, as will an increase in the fluid pressure. An increase in the beam intensity (that is the pressure at which the abrasion material is delivered to the nozzle) may reduce the effectiveness of the fluid curtain, simply because the airborne abrasion materials may penetrate the curtain with a greater speed, for example. An increasing content of liquid in the fluid may increasingly impair or obstruct the dental health professional's view of the target region. Therefore, it may be desirable in some cases to permit the professional to adjust these variables at his discretion, to allow the system to suppress the airborne abrasive material to a degree deemed satisfactory by the professional while at the same time allowing the dentist sufficient viewing of the target region with a suitable beam intensity.

It will understood by those skilled in the art that the device should be prepared in a manner suitable for its intended used. This may include, for example, fabricating the device from autoclavable materials or those which are capable to be sterilized by other techniques. It may also be appropriate in some cases to provide the tool as a disposable article.

While the above system makes use of a tool which supplies both an abrasive material stream and a fluid stream capable of establishing a barrier for suppressing airborne abrasive material, the system may alternatively be arranged wherein the abrasive material is supplied by one tool and the barrier-forming fluid stream suppled by another implement.

The terms suppress' and 'barrier' are intended not to limit the invention necessarily to only those cases where the suppression and barriers are absolute. Rather, these terms are intended to include cases where the suppression and barriers may only function to prevent a portion of the airborne abrasive material from leaving the tooth region. For example, there may be significant benefit to be gained by preventing, for example, 90 percent of the airborne abrasion materials from leaving the tooth region.

The device is also convenient because the curtain can be arranged to provide improved suppression without significantly blocking the dental professional's view of the tooth region.

While the curtain shown above completely encircles the tooth region, there may be cases where the fluid need not form a complete circumferential barrier. For example, there maybe some cases where the fluid barrier cooperates with a physical barrier, the latter being, for example behind the tooth region and there is in a position not to impair the professional's view of the tooth region, for example.

The foregoing description of some embodiments of the invention should be considered as merely illustrative of the principles of the invention. Further, since numerous modifications and changes will readily occur to those skilled in the art, it is not desired to limit the invention to the exact construction and operation shown and described. Accordingly, all suitable modifications and equivalents may be resorted to, and are considered as falling within the scope of the invention.

## Claims

1. A dental abrasion device (1) including a first delivery means (2,10,10a/54,74) for delivering an abrasive material to a target region, **characterized by**
a supply means (4,5,6/56) for producing an aerosol from incoming water and air and for supplying said aerosol; and
a second delivery means (9,11,12/52,76,78) for delivering said aerosol near said target region under conditions sufficient to suppress airborne emissions of said abrasive material from said target region.

2. A device as defined in claim 1 wherein said first delivery means (2,10,10a) includes a head (2) and a nozzle (10) mounted on the head (2) with a first conduit (10a) in the nozzle (10) to deliver said abrasive material.

3. A device as defined in claim 2, wherein said second delivery means (9,11,12) includes at least a plurality of second conduits (11) near said first conduit (10a) to deliver said aerosol.

4. A device as defined in claim 3 wherein the second conduits are spaced relative to a central axis.

5. A device as defined in claim 4 wherein said first conduit is centrally located relative to said second conduits.

6. A device as defined in claim 5 wherein said second conduits are configured so that individual streams leaving said second conduits converge to a substantially continuous spray of the aerosol towards said target region.

7. A device as defined in claim 6 wherein said spray defines an inner region, said first conduit being arranged to deliver the abrasive material to said inner region.

8. A device as defined in claim 1 wherein the supply means is operable to provide the aerosol with a water content ranging from 10 to 75 percent water by volume.

9. A device as defined in claim 8 wherein the supply means is operable to provide the aerosol with a. water content ranging from 25 to 65 percent water by volume.

10. A device as defined in claim 1 wherein the supply means is operable to provide the aerosol with a gas pressure ranging from about 5 psi to 75 psi (from about 134 kPa to 619. kPa).

11. A device as defined in claim 1 and which is operable to form a curtain from the aerosol around the target region.

12. A device as defined in claim-1 and which is operable to form a curtain from the aerosol which encircles the target region.

13. A device according to claim 2, wherein the head and nozzle form part of a dental abrasion tool.

14. A device according to claim 13, wherein the head is detachable..

15. A device according to claim 2 in which the head further comprises an adjustable.swivel mechanism allowing for the movement of the nozzle of the head to a pturatity of positions.

16. A device according to claim 2, further comprising a control unit (15,17/19,21).

17. A device according to claim 16, wherein the first delivery means includes a head (2/72) which forms part of a hand piece (3/40).

18. A device according to claim 17, in which the hand piece and the control unit are combined in a single unit (3,15,17/3,19,21).

19. A device according to claim 17 in which the hand piece (40) further comprises:
a first channel (54) for passing the abrasive material through the hand piece, said first channel being in communication with said nozzle, whereby said abrasive material stream is emitted through the nozzle on the head;
an inner fluid receiving chamber (76) for receiving the aerosol and a second channel (52) for delivering the aerosol through the hand piece, said second channel being in communication with said inner fluids receiving chamber to deliver said aerosol thereto and wherein the inner fluids receiving chamber has a plurality of outlets (78) for delivering the aerosol.

20. A device according to claim 16, further comprising a means (96,98) for regulating at least one aspect of the dental abrasion tool selected from liquid pressure, gas pressure, abrasive stream composition, and abrasive material stream intensity.

## Patentansprüche

1. Dentalschleifvorrichtung (1) einschließlich einer ersten Ausgabeeinrichtung (2,10,10a/54,74) zum Ausgeben eines Schleifmaterials zu einer Zielregion, **gekennzeichnet durch**
eine Zufuhreinrichtung (4,5,6,/56) zum Erzeugen eines Aerosols aus eingehende Wasser und eingehender Luft und zum Zuführen des Aerosols, und
eine zweite Ausgabeeinrichtung (9,11,12/52,76,78) zum Ausgeben des Aerosols nahe der Targetregion unter Bedingungen, die ausreichen, um luftgetragenen Schleifmaterialausstoß aus der Zielregion zu unterdrücken.

2. Vorrichtung nach Anspruch 1, wobei die erste Ausgabeeinrichtung (2,10,10a) einen Kopf (2) und eine Düse (10) aufweist, die an dem Kopf (2) angebracht ist, wobei eine erste Leitung (10a) in der Düse (10) vorhanden ist, um das Schleifmaterial auszugeben.

3. Vorrichtung nach Anspruch 2, wobei die zweite Ausgabeeinrichtung (9,11,12) wenigstens eine Mehrzahl von zweiten Leitungen (11) nahe der ersten Leitung (10a) aufweist, um das Aerosol auszugeben.

4. Vorrichtung nach Anspruch 3, wobei die zweiten Leitungen auf Abstand relativ zu einer Mittelachse liegen.

5. Vorrichtung nach Anspruch 4, wobei die erste Leitung mittig relativ zu den zweiten Leitungen angeordnet ist.

6. Vorrichtung nach Anspruch 5, wobei die zweiten Leitungen so gestaltet sind, dass individuelle Ströme die zweiten Leitungen verlassen und zu einem im Wesentlichen kontinuierlichen Sprühnebel aus Aerosol zur Zielregion hin zusammenlaufen.

7. Vorrichtung nach Anspruch 6, wobei der Sprühnebel eine innere Region definiert, wobei die erste Leitung so angeordnet ist, um Schleifmaterial in diese innere Region einzuspeisen.

8. Vorrichtung nach Anspruch 1, wobei die Ausgabeeinrichtung dazu betreibbar ist, um das Aerosol mit einem Wassergehalt im Bereich von 10 bis 75 Volumenprozent Wasser zu liefern.

9. Vorrichtung nach Anspruch 8, wobei die Ausgabeeinrichtung dazu betreibbar ist, das Aerosol mit einem Wassergehalt im Bereich von 25 bis 65 Volumenprozent Wasser zu liefern.

10. Vorrichtung nach Anspruch 1, wobei die Ausgabeeinrichtung dazu betreibbar ist, das Aerosol mit einem Gasdruck im Bereich von etwa 5 psi bis 75 psi (von etwa 134 kPa bis 619 kPa) zu liefern.

11. Vorrichtung nach Anspruch 1, die dazu betreibbar ist, einen Vorhang aus Aerosol um die Zielregion zu bilden.

12. Vorrichtung nach Anspruch 1, das dazu betreibbar ist, einen Vorhang aus dem Aerosol zu bilden, der die Zielregion einkreist.

13. Vorrichtung nach Anspruch 2, wobei der Kopf und die Düse einen Teil eines DentalschleifEinrichtungs bildet.

14. Vorrichtung nach Anspruch 13, wobei der Kopf abnehmbar ist.

15. Vorrichtung nach Anspruch 2, bei der der Kopf weiterhin einen einstellbaren Drehmechanismus aufweist, der die Bewegung der Düse des Kopfes in eine Mehrzahl von Positionen erlaubt.

16. Vorrichtung nach Anspruch 2, die weiter eine Steuereinheit (15, 17/19, 21) aufweist.

17. Vorrichtung nach Anspruch 16 wobei die erste Ausgabeeinrichtung einen Kopf (2/72) aufweist, der einen Teil eines Handstücks (3/40) bildet.

18. Vorrichtung nach Anspruch 17, bei der das Handstück und die Steuereinheit in einer einzigen Einheit (3,15,17/3,19,21) kombiniert sind.

19. Vorrichtung nach Anspruch 17, bei der das Handstück (40) weiter aufweist:
Einen ersten Kanal (54) zum Leiten des Schleifmaterials durch das Handstück, wobei der erste Kanal mit der Düse kommuniziert, wodurch der Schleifmaterialstrahl durch die Düse an dem Kopf ausgestoßen wird,
eine innere Fluid aufnehmende Kammer (76) zum Aufnehmen des Aerosols und einen zweiten Kanal (52) zum Leiten des Aerosols durch das Handstück, wobei der zweite Kanal mit der inneren Fluid aufnehmenden Kammer kommuniziert, um das Aerosol dorthin zu liefern, und wobei die innere Fluid aufnehmende Kammer eine Mehrzahl von Öffnunen (78) zu Ausgeben des Aerosols aufweist.

20. Vorrichtung nach Anspruch 16, die weiter eine Einrichtung (96,98) zum Einstellen wenigstens einer Eigenschaft des DentalschleifEinrichtungs aufweist, die ausgewählt ist aus Flüssigkeitsdruck, Gasdruck, Schleifmittelstromzusammensetzung und Schleifmaterialstromintensität.

## Revendications

1. Dispositif d'abrasion dentaire (1) comprenant un premier moyen d'alimentation (2, 10, 10a/54, 74) permettant de fournir une m-atière abrasive dans une zone cible, **caractérisé par**
- un moyen d'injection (4, 5, 6/56) permettant de produire un aérosol à partir d'un liquide et d'un gaz arrivants et d'injecter ledit aérosol ;
- et un deuxième moyen d'alimentation (9, 11, 12/52, 76, 78) permettant de fournir ledit aérosol à proximité de ladite zone cible dans des conditions suffisantes pour supprimer les émissions aériennes de ladite matière abrasive à partir de ladite zone cible.

2. Dispositif selon la revendication 1, dans lequel ledit premier moyen d'alimentation (2, 10, 10a) comprend une tête (2) et une tuyère (10) montée sur la tête (2), un premier conduit (10a) se trouvant dans la tuyère (10) pour fournir ladite matière abrasive.

3. Dispositif selon la revendication 2, dans lequel ledit premier moyen d'alimentation (9, 11, 12) comprend au moins une pluralité de deuxièmes conduits (11) situés à proximité dudit premier conduit (10a) afin de fournir ledit aérosol.

4. Dispositif selon la revendication 3, dans lequel les deuxièmes conduits sont espacés par rapport à un axe central.

5. Dispositif selon la revendication 4, dans lequel ledit premier conduit est centré par rapport aux dits deuxièmes conduits.

6. Dispositif selon la revendication 5, dans lequel lesdits deuxièmes conduits sont agencés pour que des flux individuels quittant lesdits deuxièmes conduits convergent vers un jet pratiquement continu de l'aérosol en direction de ladite zone cible.

7. Dispositif selon la revendication 6, dans lequel ledit jet définit une zone interne, ledit premier conduit étant disposé pour fournir la matière abrasive dans ladite zone interne.

8. Dispositif selon la revendication 1, dans lequel le moyen d'injection peut fonctionner pour fournir un aérosol contenant une proportion d'eau comprise entre 10 et 75 % d'eau en volume.

9. Dispositif selon la revendication 8, dans lequel le moyen d'injection peut fonctionner pour fournir un aérosol contenant une proportion d'eau comprise entre 25 et 65 % d'eau en volume.

10. Dispositif selon la revendication 1, dans lequel le moyen d'injection peut fonctionner pour fournir un aérosol sous une pression de gaz comprise entre environ 5 et 75 % livres par pouce carré (d'environ 134 kPa à 619 kPa).

11. Dispositif selon la revendication 1, qui peut fonctionner pour former un écran à partir de l'aérosol autour de la zone cible.

12. Dispositif selon la revendication 1, qui peut fonctionner pour former un écran à partir de l'aérosol qui entoure la zone cible.

13. Dispositif selon la revendication 2, dans lequel la tête et la tuyère forment une partie d'un outil d'abrasion dentaire.

14. Dispositif selon la revendication 13, dans lequel la tête est détachable.

15. Dispositif selon la revendication 2, dans lequel la tête comprend en outre un mécanisme ajustable d'émerillon permettant de le mouvement de la tuyère de la tête vers une pluralité de positions.

16. Dispositif selon la revendication 2, comprenant en outre une unité de commande (15,17/19,21).

17. Dispositif selon la revendication 16, dans lequel le premier moyen d'alimentation comprend une tête (2/72) qui forme une partie d'une pièce que l'on tient à la main (3/40).

18. Dispositif selon la revendication 17, dans lequel la pièce tenue à la main et l'unité de commande forment une seule unité (3, 15, 17/3, 19, 21).

19. Dispositif selon la revendication 17, dans lequel la pièce tenue à la main (40) comprend, en outre :
- un premier canal (54) pour faire passer la matière abrasive à travers la pièce tenue à la main, ledit canal étant en communication avec ladite tuyère, de telle sorte que ledit flux de matière abrasive est émis à travers la tuyère de la tête :
- une chambre de réception de fluide intérieure (76) pour recevoir l'aérosol et un second canal (52) pour délivrer l'aérosol à travers la pièce tenue à la main, ledit deuxième canal étant en communication avec ladite chambre de réception de fluide intérieure pour lui délivrer ledit aérosol et dans lequel la chambre de réception de fluide intérieure a une pluralité de sorties (78) pour délivrer l'aérosol.

20. Dispositif selon la revendication 16, comprenant en ouvre un moyen (96, 98) pour réguler au moins un aspect de l'outil d'abrasion dentaire, choisi parmi la pression de liquide, la pression de gaz, la composition de flux abrasif, et l'intensité du flux de matière abrasive.
